**Europäisches Patentamt**

**European Patent Office**

**Office européen des brevets**

(19)

(11) **EP 1 479 426 A1**

(12) **EUROPÄISCHE PATENTANMELDUNG**

(43) Veröffentlichungstag:
**24.11.2004 Patentblatt 2004/48**

(51) Int Cl.⁷: **B01D 35/143**

(21) Anmeldenummer: **03405353.8**

(22) Anmeldetag: **21.05.2003**

| (84) Benannte Vertragsstaaten:<br>**AT BE BG CH CY CZ DE DK EE ES FI FR GB GR HU IE IT LI LU MC NL PT RO SE SI SK TR**<br>Benannte Erstreckungsstaaten:<br>**AL LT LV MK**<br><br>(71) Anmelder: **Levitronix LLC**<br>**Waltham, MA 02451 (US)** | (72) Erfinder: **Schoeb, Reto, Dr.**<br>**8964 Rudolfsetten (CH)**<br><br>(74) Vertreter: **Sulzer Management AG**<br>**Patentabteilung / 0067,**<br>**Zürcherstrasse 12**<br>**8401 Winterthur (CH)** |

(54) **Filtervorrichtung, sowie ein Verfahren zur Beurteilung des Zustandes einer Filtervorrichtung**

(57)  Die Erfindung betrifft eine Filtervorrichtung (1) zum Ausfiltern von Substanzen aus einem Fluid (2), umfassend ein Filtergehäuse (3) mit einem Einlass (4) und einem Auslass (5) für das zu filternde Fluid (2), sowie ein Filterelement (6), das im Betriebszustand vom Fluid (2) durchströmt wird. Dabei ist das Filterelement (6) so ausgestaltet und derart im Filtergehäuse (3) angeordnet, dass das Filterelement (6) den Einlass (4) und den Auslass (5) dichtend voneinander trennt, wobei zwischen dem Einlass (4) und dem Auslass (5) des Filtergehäuses (3) zur Messung eines Differenzdrucks (Δp) ein Differenzdruckmesser (7) vorgesehen ist. Darüber hinaus betrifft die Erfindung ein Verfahren zur Beurteilung des Zustandes einer Filtervorrichtung (1).

Fig. 1

EP 1 479 426 A1

**Beschreibung**

Die Erfindung betrifft eine Filtervorrichtung zum Ausfiltern von Substanzen aus einem Fluid, sowie ein Verfahren zur Beurteilung des Zustandes einer solchen Filtervorrichtung gemäss dem Oberbegriff des unabhängigen Anspruchs der jeweiligen Kategorie.

Aus dem Stand der Technik sind Filtervorrichtungen der verschiedensten Art zur Filterung von Fluiden, wie Flüssigkeiten oder Gasen, wohlbekannt. Dabei sind die eigentlichen Filterelemente einerseits in der Regel einem gewissen Verschleiss unterworfen, das heisst, dass die Trenngrenze mit der Zeit grösser wird, weil sich die Filterporen des Filterelements aufweiten oder die Filter aufgrund zu starker chemischer, thermischer, mechanischer oder anderer Belastungen im Betrieb mit der Zeit zerstört werden können. Andererseits wird sich naturgemäss mit zunehmender Betriebsdauer immer mehr ausgefilterte Substanz am Filterelement festsetzen und die Filterporen verstopfen, so dass die Filterwirkung nachlässt, bis bei Erreichen eines bestimmten Verschmutzungsgrades das Filterelement ausgetauscht werden muss.

Wenn das zu filternde Fluid eine im wesentliche gleichbleibende Konzentration an zu filternden Substanzen aufweist, ist es häufig möglich, mit befriedigender Genauigkeit das Ende der Lebensdauer des Filterelements abzuschätzen, so dass der aktuelle Zustand der Filtervorrichtung nicht ständig überwacht werden muss. Vielmehr kann in solchen Fällen das Filterelement in vordefinierten Wartungsintervallen ausgetauscht werden, ohne dass die Gefahr besteht, dass der Filter nach Ablauf eines entsprechenden Wartungsintervalls noch weit von seiner Verschleissgrenze entfernt ist.

Problematisch ist jedoch häufig die Überwachung der Verschleissgrenze bei Filtervorrichtungen, die zur Filterung von mechanisch und / oder chemisch sehr aggressiven Fluiden dienen, die das Filterelement extrem stark belasten und im Betrieb zu vorzeitigem Verschleiss und häufig auch zu spontan auftretenden Schäden führen können. In solchen Fällen ist eine Überwachung bzw. Kontrolle der Verschleissgrenze in Form von zeitlich fest vorgegeben Wartungsintervallen nicht sinnvoll und vielfach auch nicht möglich, weil die Lebensdauer des Filterelements nicht pauschal abschätzbar ist, sondern je nach Einsatz stark schwankt. In solchen Fällen ist es geboten, den Zustand der Filtervorrichtung ständig zu überwachen um insbesondere zu gewährleisten, dass im Falle einer spontanen Beschädigung oder Verstopfung des Filterelements dieses sofort ausgetauscht werden kann.

Daher sind aus dem Stand der Technik verschiedene Verfahren und Vorrichtungen bekannt, die es gestatten, den Zustand der Filtervorrichtung im Betrieb ständig zu überwachen. Dabei wird häufig der Druck im zu filternden Fluid vor dem Eintritt in die Filtervorrichtung und nach Verlassen der Filtervorrichtung mit entsprechenden Drucksensoren gemessen.

Die bekannten Vorrichtungen sind in ihrem Aufbau jedoch sehr aufwendig, weil die Sensortechnik für die Druckmessung am Eingang und am Ausgang der Filtervorrichtung im wesentlichen jeweils in doppelter Ausführung vorliegen muss. Die Drucksensoren, die gegen mechanische oder chemische Belastungen, gegen Temperatur oder andere schädigende Einflüsse in der Regel sehr empfindlich sind, müssen, um eine entsprechende Messgenauigkeit zu gewährleisten, bzw. die Druckmessung überhaupt zu ermöglichen, nicht selten in unmittelbaren Kontakt mit dem Fluid gebracht werden, was dazu führt, dass die Sensoren oft schon nach kurzer Betriebsdauer ausgetauscht werden müssen. Wenn möglich, werden die Sensoren um Schäden der zuvor geschilderten Art zu vermeiden, mit Kapselungen oder Schutzhüllen versehen, was natürlich aufwendig und teuer ist und die Messgenauigkeit empfindlich beeinträchtigen kann.

Darüber hinaus ist der Absolutwert des Drucks im Fluid am Ausgang und / oder am Eingang der Filtervorrichtung kein direktes Mass für den Zustand bzw. für die Veränderung des Zustands des Filterelements der Filtervorrichtung.

Die Aufgabe der Erfindung ist es daher, eine Filtervorrichtung zum Ausfiltern von Substanzen aus einem Fluid, sowie ein Verfahren vorzuschlagen, womit anhand einer geeigneten Messgrösse der Zustand der Filtervorrichtung im Betriebszustand beurteilt werden kann und die aus dem Stand der Technik bekannten Nachteile vermieden werden.

Die diese Aufgaben in apparativer und verfahrenstechnischer Hinsicht lösenden Gegenstände der Erfindung sind durch die Merkmale des unabhängigen Anspruchs der jeweiligen Kategorie gekennzeichnet.

Die jeweiligen abhängigen Ansprüche beziehen sich auf besonders vorteilhafte Ausführungsformen der Erfindung.

Die erfindungsgemässe Filtervorrichtung zum Ausfiltern von Substanzen aus einem Fluid umfasst ein Filtergehäuse mit einem Einlass und einem Auslass für das zu filternde Fluid, sowie ein Filterelement, das im Betriebszustand vom Fluid durchströmt wird. Dabei ist das Filterelement so ausgestaltet und derart im Filtergehäuse angeordnet, dass das Filterelement den Einlass und den Auslass dichtend voneinander trennt, wobei zwischen dem Einlass und dem Auslass des Filtergehäuses zur Messung eines Differenzdrucks ein Differenzdruckmesser vorgesehen ist.

Darüber hinaus kann zur Messung eines Durchflusses des Fluids durch die Filtervorrichtung noch ein Durchflussmesser vorgesehen sein, der beispielsweise am Einlass oder am Auslass der Filtervorrichtung vorgesehen sein kann. Selbstverständlich kann ein Durchflussmesser bei bestimmten Ausführungen der erfindungsgemässen Filtervorrichtung auch fehlen, oder in an die Filtervorrichtung angeschlossenen Apparaturen vorgesehen sein.

Das Filterelement ist in einem einfachen Ausführungsbeispiel im wesentlichen aus einer Filtermembran oder einem Filternetz aufgebaut, das beispielsweise in Form eines mehr oder weniger ebenen Filtersiebs ausgestaltet sein kann und eventuell mehrere Schichten umfassen kann. Bei einem anderen Ausführungsbeispiel kann das Filterelement auch als Filterpatrone, insbesondere als austauschbare Filterpatrone oder in einer anderen geeigneten Form ausgebildet sein. Das Filtersieb kann dabei je nach Anforderung aus verschiedenen, insbesondere korrosionsbeständigen Werkstoffen, wie beispielsweise aus Kunststoff, Verbundwerkstoffen oder unterschiedlichen Stählen wie 1.4462, 1.4539 oder 2.4602 oder aus anderen geeigneten Materialien gefertigt sein. Zum Schutz gegen Verschleiss können die Filtersiebe darüber hinaus mit geeigneten Schichten versehen sein, zum Beispiel mit Hartchrom Schichten, Wolfram-Carbid (WC), Keramik oder auch anders gehärtet sein. Das Filterelement kann insbesondere zum Beispiel aus einer Keramik oder aus einem Polymer, insbesondere aus Perfluoraralkoxy-Copolymer (PFA) oder aus Polytetrafluorethylen (PTFE) oder aus Polyvinylidenfluorid (PVDF) aufgebaut sein. Dabei kann das Filtersieb unter anderem gestanzt, gebohrt, gelasert, Elektronenstrahl gelocht oder Wasserstrahl geschnitten sein, wobei grundsätzlich auch andere Techniken in Frage kommen. Bevorzugt beträgt dabei die Trenngrenze des Filterelements weniger als ein Mikrometer, vorzugsweise höchstens 100 Nanometer.

Da die erfindungsgemässe Filtervorrichtung jedoch sehr flexibel zur Filterung unterschiedlichster Fluide, insbesondere neben der Filterung von Flüssigkeiten aller Art auch zur Filterung von gasförmigen Fluiden geeignet ist, kann die Trenngrenze von den oben angegeben Werten im speziellen auch erheblich nach oben oder unten abweichen.

Es versteht sich, dass das Filterelement auch aus einfachen Materialien, wie beispielsweise aus Papier bestehen kann oder auch durch eine semipermeable Membran gebildet werden kann, die unter anderem auch zur Trennung von Ionen unterschiedlicher Grösse geeignet ist.

Erfindungsgemäss ist zwischen dem Einlass und dem Auslass des Filtergehäuses zur Messung eines Differenzdrucks ein Differenzdruckmesser vorgesehen. Es versteht sich, dass der Differenzdruckmesser bevorzugt so ausgestaltet und derart zwischen Einlass und Auslass angeordnet ist, dass der Differenzdruckmesser den Einlass und den Auslass dichtend voneinander trennt. Der Differenzdruck zwischen Einlass und Auslass wird dann im wesentlichen durch das Filterelement hervorgerufen, das natürlich den freien Fluss des Fluids vom Einlass zum Auslass in einem bestimmten Masse behindert, wodurch der zuvor erwähnte Differenzdruck aufgebaut wird. Je kleiner die effektive Durchflussfläche des Filterelements ist, durch die das Fluid durchströmen kann, also je kleiner beispielsweise die Porengrösse, die Zahl der Poren pro Flächeneinheit oder je stärker der Verschmutzungszustand des Filterelements ist, um so grösser ist der Differenzdruck bei einem bestimmten Durchfluss. Damit ist der Differenzdruck direkt ein Mass für den Zustand der Filtervorrichtung, bzw. des Filterelements. Ein Filterelement, das nach einer bestimmten Betriebsdauer bei gegebenem Durchfluss aufgrund von im und / oder am Filterelement abgelagerter ausgefilterter Substanz eine kleinere effektive Durchflussfläche aufweist, also mehr oder weniger stark verschmutzt bzw. verstopft ist, führt zu einem höheren Differenzdruck als das bei einem neuen Filterelement bei gleichem Durchfluss der Fall ist. Wird also ein bestimmter, für den gegebenen Durchfluss charakteristischer oberer Grenzdruck erreicht, ist das Filterelement zu stark verschmutzt, d.h. weitgehend verstopft und muss ausgetauscht werden.

Andererseits ist es durchaus auch möglich, dass ein Filterelement im Betrieb beschädigt wird oder aufgrund von Produktionsfehlern eine entsprechende maximale Porengrösse überschritten wird. So kann die Filtervorrichtung beispielsweise Bestandteil einer Vorrichtung sein, in welcher Wafer, z.B. Halbleiter-Wafer für die Elektronik mittels einer Flüssigkeit in einem Cleaning-Prozess gereinigt oder poliert werden, wobei die entsprechende Flüssigkeit durch die Filtervorrichtung ständig gereinigt werden muss. Tritt dabei ein Bruch eines Wafers auf, so können die häufig messerscharfen Bruchstücke in die Filtervorrichtung gelangen und dass Filterelement zerstören. Wird dies nicht rechtzeitig erkannt, können die Bruckstücke durch das zerstörte Filterelement wieder in den Flüssigkeitskreislauf zurück gelangen und an der Anlage oder an zu bearbeitenden Wafern verheerende Schäden anrichten. Mit der erfindungsgemässen Filtervorrichtung sind solche Schäden verhinderbar, da in einem solchen Fall der Differenzdruck bei gegebenem Durchfluss kleiner als ein charakteristischer unterer Grenzdruck wird, was anzeigt, dass der Filter defekt ist und deshalb ausgetauscht werden muss.

Dadurch, dass bei der erfindungsgemässen Filtervorrichtung durch Messung des Differenzdrucks der Zustand des Filterelements ständig überwacht wird, eignet sich die Filtervorrichtung insbesondere zur Filterung von mechanisch und / oder chemisch sehr aggressiven Fluiden, die das Filterelement stark belasten und zu vorzeitigem Verschleiss, und häufig auch zu spontan auftretenden Schäden führen können, die beispielsweise in Form von zeitlich fest vorgegeben Wartungsintervallen nicht überwachbar sind. Beispiele für solche Fluide sind unter anderem Säuren oder Laugen, die stark ätzend wirken und das Filterelement in unkontrollierbarer Weise angreifen können. Ein anderes Beispiel sind mechanisch aggressive Polierflüssigkeiten, wie "Slurry", das unter anderem zur Politur von Halbleiter-Wafern in der Halbleiterindustrie verwendet wird. Solche Polierflüssigkeiten haben naturgemäss stark abrasive Eigenschaften, die natürlich auch das Filterelement einer Filtervorrichtung entsprechend schädigen können, so dass es zum Beispiel zum Aufweiten der Poren kommen kann, was zu verheerenden Schäden in angeschlossenen Maschinenteilen oder an einem zu bearbeitendem Produkt führen kann. Besonders vorteilhaft ist die erfindungsgemässe Filtervorrichtung in ihren vielfältigen Ausführungsformen auch dann einsetzbar, wenn die Konzentration der aus dem Fluid zu filternden Substanzen stark schwankt, so dass die Lebensdauer des Filterelements nicht pauschal abschätzbar ist, sondern je nach Einsatz stark unterschiedlich ist. Dadurch, dass der Zustand der Filtervorrichtung ständig überwachbar ist, kann das Filterelement bis zum Erreichen seiner tatsächlichen Verschleissgrenze betrieben werden. Damit werden insbesondere auch flexiblere Wartungsintervalle möglich, was letztlich zu einem flexibleren Einsatz der Filtervorrichtung und damit zu erheblichen Kostenersparnissen führt.

In einem bevorzugten Ausführungsbeispiel einer erfindungsgemässen Filtervorrichtung umfasst der Differenzdruckmesser einen Hohlraum, in welchem ein mit einer Rückstellkraft beaufschlagbarer Probekörper derart beweglich angeordnet ist, dass der Probekörper mit dem Differenzdruck zwischen Einlass und Auslass beaufschlagbar ist und die Grösse des Differenzdrucks aus einer Position des Probekörpers im Hohlraum bestimmbar ist. Dabei ist der Probekörper zur Messung des Differenzdrucks, der auf den Probekörper wirkt, im besonderen mittels eines Federelements mit einer mechanischen Rückstellkraft oder mittels eines magnetischen Rückstellelements mit einer magnetischen Rückstellkraft beaufschlagbar.

Zur Bestimmung der Position des Probekörpers im Hohlraum kann ein Positionssensor und / oder ein Positionsgeber vorgesehen sein, wobei der Positiongeber vorteilhaft mit dem Positionssensor zusammenwirkt. Positionssensor und Positiongeber können somit ein Positionssystem bilden, das auf unterschiedlichen physikalischen Prinzipien beruhen kann und entsprechend mit verschiedenartigen Sensortypen ausgestattet sein kann. So können der Positionssensor und / oder der Positionsgeber beispielsweise ein optisches Positionssystem, ein magnetisches Positionssystem und / oder ein elektrisches Positionssystem bilden. Darüber hinaus sind auch Positionssysteme möglich, die auf anderen physikalischen Prinzipien bzw. Messgrössen beruhen.

Dabei kann, wie oben bereits erwähnt, der Differenzdruck zwischen Einlass und Auslass aus einer Verschiebung abgeleitet werden, die der Probekörper aufgrund des wirkenden Differenzdruckes erfährt. Allerdings ist es auch möglich, den Differenzdruck durch eine Gegenkraft derart zu kompensieren, dass der Probekörper in einer vorgebbaren Position, einer Nulllage, auch bei sich änderndem Differenzdruck verbleibt.

Dazu kann in einem besonders bevorzugten Ausführungsbeispiel ein Elektromagnet zum Ausüben einer Magnetkraft auf den Probekörper, sowie eine Ansteuereinheit für den Elektromagneten vorgesehen sein, wobei die Ansteuereinheit Regelmittel umfasst, welche mit Hilfe eines Signals des Positionssensors den Elektromagneten derart ansteuern, dass der Probekörper an einer vorgebbaren Position im Hohlraum fixierbar ist. Durch Messung des elektrischen Stromes der notwendig ist, um den Probekörper gegen den Differenzdruck im Hohlraum zu fixieren, kann der Differenzdruck unmittelbar abgeleitet werden. Dabei sind die Regelmittel zu Ansteuerung des Elektromagneten bevorzugt als PD-Regler, als PID-Regler oder als Zustandsregler ausgestaltet.

Erfindungsgemäss wird weiter ein Verfahren zur Beurteilung des Zustands einer Filtervorrichtung zum Ausfiltern von Substanzen aus einem Fluid vorgeschlagen. Die Filtervorrichtung umfasst dabei ein Filtergehäuse mit einem Einlass und einem Auslass für das zu filternde Fluid, sowie ein Filterelement, das im Betriebszustand vom Fluid durchströmt wird. Dabei ist das Filterelement so ausgestaltet und derart im Filtergehäuse angeordnet, dass das Filterelement den Einlass und den Auslass dichtend voneinander trennt, wobei mittels eines Differenzdruckmessers, der zwischen dem Einlass und dem Auslass des Filtergehäuses vorgesehen ist, ein Differenzdruck bestimmt wird und der Differenzdruck zur Beurteilung des Zustands des Filterelements herangezogen wird.

Im folgenden wird die Erfindung an Hand der schematischen Zeichnung näher erläutert. Es zeigen:

Fig. 1    ein erstes Ausführungsbeispiel einer erfindungsgemässen Filtervorrichtung;

Fig. 2    Filtervorrichtung mit austauschbarer Filterpatrone;

Fig. 3    einen Differenzdruckmesser mit einem in einem Hohlraum beweglich angeordneten Probekörper;

Fig. 4a    ein zweites Ausführungsbeispiel gemäss Fig. 3 mit einer magnetischen Positionsanzeige;

Fig. 4b    ein anderes Ausführungsbeispiel gemäss Fig. 4a;

Fig. 5a    einen Differenzdruckmesser mit magnetischem Positionsgeber;

Fig. 5b    ein zweites Ausführungsbeispiel gemäss Fig. 5a;

Fig. 6    einen Differenzdruckmesser mit optischem Positionssystem;

Fig. 7a    einen Differenzdruckmesser mit magnetischem Positionssystem;

Fig. 7b     ein anderes Ausführungsbeispiel gemäss Fig. 7a;

Fig. 8     ein Differenzdruckmesser mit Differentialtransformator;

Fig. 8a     ein elektrisches Ersatzschaltbild gemäss Fig. 8;

Fig. 9     einen Differenzdruckmesser mit elektrischem Positionssystem;

Fig. 10     ein weiteres Ausführungsbeispiel gemäss Fig. 9 mit einem dielektrischen Probekörper;

Fig. 11     einen Differenzdruckmesser mit Elektromagnet zur Fixierung der Position des Probekörpers;

Fig. 12a     ein Filtermodell im Druck / Durchflussdiagramm;

Fig. 12b     Blockschaltbild zur Bestimmung des Zustands der Filtervorrichtung mittels eines Filtermodells gemäss Fig. 12a.

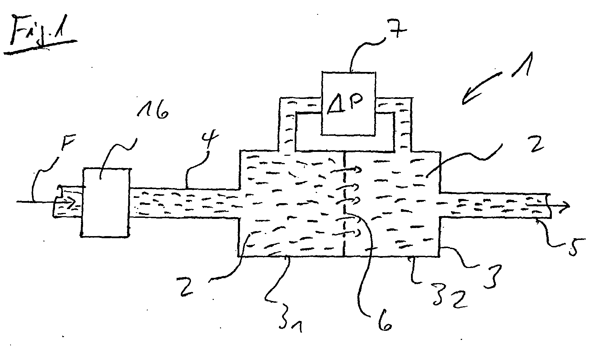

Fig. 1 zeigt in einer schematischen Darstellung ein erstes Ausführungsbeispiel einer erfindungsgemässen Filtervorrichtung, die im folgenden gesamthaft mit dem Bezugszeichen 1 bezeichnet wird. Die Filtervorrichtung 1 zum Ausfiltern von Substanzen aus einem Fluid 2 umfasst in an sich bekannter Weise ein Filtergehäuse 3 mit einem Einlass 4 für das mit Substanzen verunreinigte Fluid 2 und mit einem Auslass 5 für das gefilterte Fluid 2. Im Filtergehäuse 3 ist ein Filterelement 6 angeordnet, das zur Filterung des Fluids 2 im Betriebszustand von diesem durchströmt wird. Darüberhinaus kann zur Messung eines Durchflusses FL des Fluids 2 durch die Filtervorrichtung 1 noch ein Durchflussmesser 16 vorgesehen sein, der beispielsweise wie in Fig. 1 schematisch dargestellt, am Einlass der Filtervorrichtung 1 vorgesehen sein kann. Das Filterelement 6 ist in dem in Fig. 1 gezeigten einfachen Ausführungsbeispiel im wesentlichen aus einer Filtermembran oder einem Filternetz aufgebaut, das beispielsweise in Form eines mehr oder weniger ebenen Filtersiebs 6 ausgestaltet sein kann und eventuell mehrere Schichten umfassen kann. Das Filtersieb 6 kann dabei je nach Anforderung aus verschiedenen, insbesondere korrosionsbeständigen Werkstoffen, wie beispielsweise aus Kunststoff, Verbundwerkstoffen oder unterschiedlichen Stählen wie 1.4462, 1.4539 oder 2.4602 oder aus anderen geeigneten Materialien gefertigt sein. Zum Schutz gegen Verschleiss können die Filtersiebe darüber hinaus mit geeigneten Schichten versehen sein, zum Beispiel mit Hartchrom Schichten, Wolfram-Carbid (WC), Keramik oder auch anders gehärtet sein. Das Filterelement 6 kann insbesondere zum Beispiel aus einer Keramik oder aus einem Polymer, insbesondere aus Perfluoraralkoxy-Copolymer (PFA) oder aus Polytetrafluorethylen (PTFE) oder aus Polyvinylidenfluorid (PVDF) aufgebaut sein. Dabei kann das Filtersieb 6 unter anderem gestanzt, gebohrt, gelasert, Elektronenstrahl gelocht oder Wasserstrahl geschnitten sein, wobei grundsätzlich auch andere Techniken in Frage kommen. Es versteht sich, dass das Filterelement 6 auch aus einfachen Materialien, wie beispielsweise aus Papier bestehen kann oder auch durch eine semipermeable Membran gebildet werden kann, die unter anderem auch zur Trennung von Ionen unterschiedlicher Grösse geeignet ist.

Das Filterelement 6 trennt das Filtergehäuse 3 in eine Einlaufkammer 31 und eine Auslaufkammer 32, wobei das Filterelement 6 so ausgestaltet und im Filtergehäuse 3 angeordnet ist, dass das Filterelement 6 den Einlass 4 und den Auslass 5 dichtend voneinander trennt. Das heisst, dass innerhalb des Filtergehäuses 3 das zu filternde Fluid 2 von der Einlaufkammer 31 in die Auslaufkammer 32 das Filterelement 32 in jedem Fall durchströmt, so dass ein optimales Ausfiltern der Substanzen aus dem Fluid 2 gewährleistet ist.

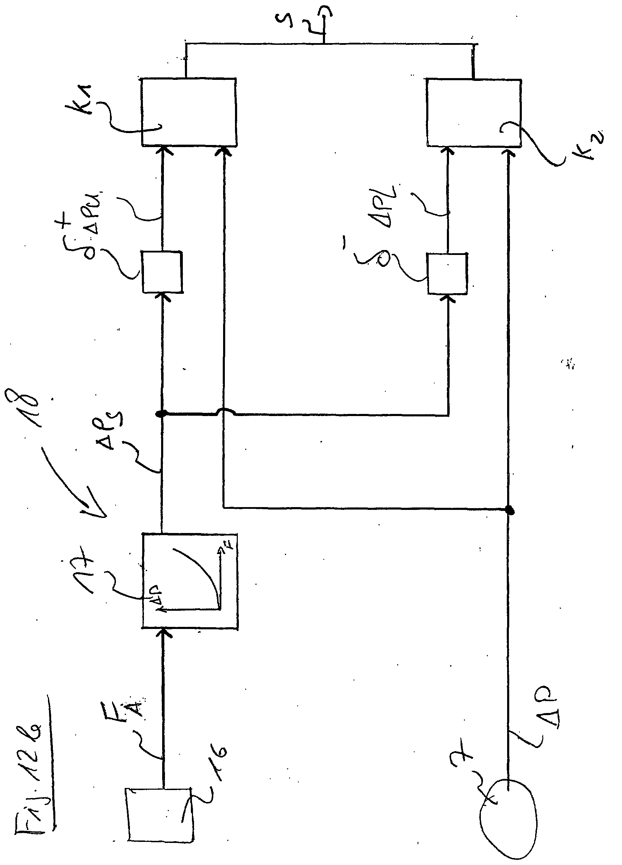

Dabei ist zwischen dem Einlass 4, bzw. der Einlaufkammer 31 und dem Auslass 5, bzw. der Auslaufkammer 32 des Filtergehäuses 3 zur Messung eines Differenzdrucks $\Delta p$ ein Differenzdruckmesser 7 vorgesehen. Es versteht sich, dass wie in Fig. 1 schematisch dargestellt, der Differenzdruckmesser 7 bevorzugt so ausgestaltet und derart zwischen Einlass 4 und Auslass 5 angeordnet ist, dass der Differenzdruckmesser 7 den Einlass 4 und den Auslass 5 dichtend voneinander trennt. Der Differenzdruck $\Delta p$ zwischen Einlass 4 und Auslass 5 im Fluid 2 wird dann im wesentlichen durch das Filterelement 6 hervorgerufen, das natürlich den freien Fluss des Fluids 2 vom Einlass 4 zum Auslass 5 in einem bestimmten Masse behindert, wodurch der Differenzdruck $\Delta p$ aufgebaut wird. Je kleiner die effektive Durchflussfläche des Filterelements 6 ist, durch die das Fluid 2 durchströmen kann, um so grösser ist der Differenzdruck $\Delta p$ und umgekehrt. Damit ist der Differenzdruck $\Delta p$ direkt ein Mass für den Zustand der Filtervorrichtung 1, bzw. des Filterelements 6. Ein Filterelement 6, das nach einer bestimmten Betriebsdauer bei gegebenem Durchfluss FL aufgrund von im und / oder am Filterelement 6 abgelagerter ausgefilterter Substanz eine kleinere effektive Durchflussfläche aufweist, also mehr oder weniger stark verstopft ist, führt zu einer höheren Druckdifferenz $\Delta p$ als ein neues Filterelement 6 bei gleichem Durchfluss FL. Wird also ein bestimmter, für den gegebenen Durchfluss $F_A$ (siehe Fig. 12a) charakteristischer oberer Grenzdruck $\Delta p_U$ erreicht, ist das Filterelement 6 weitgehend verschmutzt bzw. verstopft und muss ausgetauscht werden.

Andererseits ist es durchaus auch möglich, dass ein Filterelement 6 im Betrieb beschädigt wird, oder aufgrund von Produktionsfehlern eine entspre-

**EP 1 479 426 A1**

chende maximale Porengrösse, also Trenngrenze überschritten wird. In einem solchen Fall ist der Differenzdruck $\Delta p$ bei gegebenem Durchfluss $F_A$ kleiner als ein charakteristischer unterer Grenzdruck $\Delta p_L$, was anzeigt, dass der Filter defekt ist und deshalb ausgetauscht werden muss.

Das erfindungsgemässe Verfahren, nach dem der Zustand der Filtervorrichtung 1 beurteilt werden kann, wird weiter unten an Hand von Beispielen noch detaillierter beschrieben. Wesentlich ist, dass der Zustand der Filtervorrichtung 1 allein von einem durch den Differenzdruckmesser 7 bestimmbaren Differenzdruck $\Delta p$ abhängt, der im allgemeinen vom aktuellen Durchfluss $F_A$ des Fluids 2 durch die Filtervorrichtung 1 bestimmt ist und von diesem in charakteristischer Weise abhängt. Insbesondere ist der absolute Wert des Druck der im Fluid 2 herrscht primär nicht ausschlaggebend für die Beurteilung des Zustand der Filtervorrichtung 1.

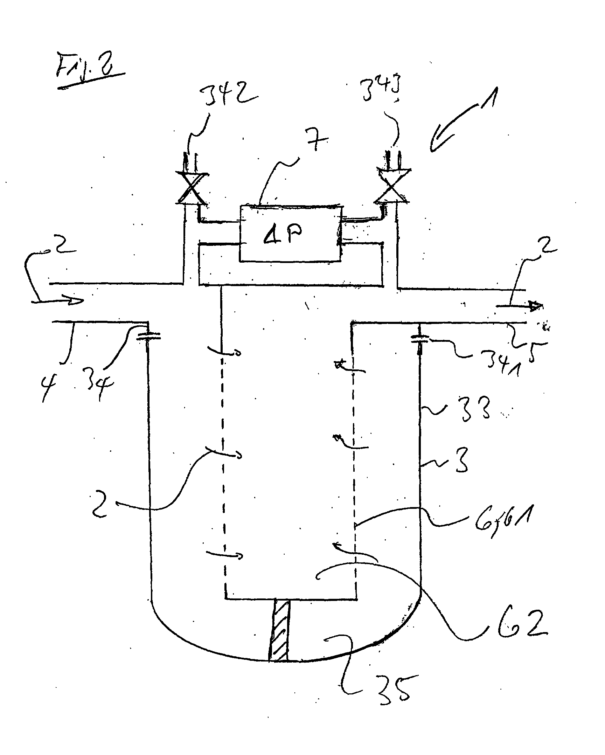

In Fig. 2 ist ein Ausführungsbeispiel einer Filtervorrichtung 1 mit einer austauschbaren Filterpatrone 61 dargestellt. Das Filtergehäuse 3 wird durch einen Gehäusedeckel 34 und einen einseitig abgeschlossenen Zylinder 33 gebildet, wobei der Gehäusedeckel 34 den Zylinder 33 an einem offenen Ende begrenzt. Der Gehäusedeckel 34 kann dabei beispielsweise mittels eines Gewindes 341, einer Verschraubung 341, eines Bajonettverschlusses 341 oder in anderer geeigneter Art und Weise mit dem Zylinder 33 verbunden sein. Der Gehäusedeckel 34 umfasst den Einlass 4 und den Auslass 5 für das Fluid 2. Das Filterelement 6 ist als austauschbare Filterpatrone 61 ausgeführt, die in an sich bekannter Weise im Filtergehäuse 3 so angeordnet ist, dass der Einlass 4 und der Auslass 5 dichtend voneinander getrennt sind. Die Filterpatrone 61 kann beispielsweise als einseitig offener zylindrischer Körper 61 mit Begrenzungswänden ausgebildet sein, die einen Innenraum 62 der Filterpatrone 61 begrenzen, wobei zumindest teilweise die Begrenzungswände des zylindrischen Körpers 61 als Filterelemente 6 ausgebildet sind. Die Filterpatrone 61 ist dabei so im Filtergehäuse 3 angeordnet, dass, wie in Fig. 2 schematisch dargestellt, die Filterpatrone 61 das Filtergehäuse 3 im Inneren in einen äusseren Bereich 35 und den Innenraum 62 trennt, so dass das Fluid 2 vom Auslass 4 zunächst in den äusseren Bereich 35 gelangt, sodann durch die als Filterelement 6 ausgestaltet Begrenzungswand der Filterpatrone 61 in den Innenraum 62 der Filterpatrone 61 strömt, wobei das Fluid 2 gefiltert wird, um schliesslich über den Auslass 5 die Filtervorrichtung 1 wieder zu verlassen.

Es versteht sich von selbst, dass in einem anderen Ausführungsbeispiel der Einlass 4 und der Auslass 5 auch vertauscht sein können, so dass das Fluid 2 vom Einlass 4 zunächst in den Innenraum 62 der Filterpatrone 61 gelangt, durch die als Filterelement 6 ausgestaltete Begrenzungswand der Filterpatrone 61 in den äusseren Bereich 35 strömt und schliesslich über den Auslass 5 der Filtervorrichtung 1 wieder abfliesst.

Am Gehäusedeckel 34 ist weiterhin der Differenzdruckmesser 7 zwischen Einlass 4 und Auslass 5 angeordnet, so dass mit dem Differenzdruckmesser 7 der Differenzdruck $\Delta p$ zwischen Einlass 4 und Auslass 5 im Fluid 2 bestimmbar ist. Weiter sind am Gehäusedeckel 34 je ein Entlüftungsstutzen 342 und 343 vorgesehen, die eventuell entsprechende Entlüftungsventile umfassen können, so dass im Bedarfsfall der äussere Bereich 35 und der Innenraum 62 getrennt entlüftbar sind. Durch Bestimmung des Differenzdruck $\Delta p$ kann dann, wie bereits zuvor anhand von Fig. 1 ausführlich geschildert, der Zustand der Filterpatrone 61 im Betrieb bestimmt werden.

Selbstverständlich sind die in den Fig. 1 und Fig. 2 schematisch gezeigten Ausführungsformen einer Filtervorrichtung 1 beispielhaft zu verstehen. Wesentlich für die Erfindung ist, dass ein Differenzdruckmesser 7 zur Messung des Differenzdrucks $\Delta p$ zwischen Einlass 4 und Auslass 5 der erfindungsgemässen Filtervorrichtung 1 vorgesehen ist. Die konkrete Ausführung von Filtergehäuse 3 und Filterelement 6 kann natürlich, auch in Anlehnung an bekannte Beispiele aus dem Stand der Technik, sehr unterschiedlich sein.

Im Folgenden werden einige besonders bevorzugte Ausführungsbeispiele von Differenzdruckmessern 7 der erfindungsgemässen Filtervorrichtung 1 exemplarisch diskutiert. Es kommen dabei bevorzugt Differenzdruckmesser 7 zum Einsatz, die einen Hohlraum 71 umfassen, in welchem ein mit einer Rückstellkraft beaufschlagbarer Probekörper 8 derart beweglich angeordnet ist, dass der Probekörper 8 mit dem Differenzdruck $\Delta p$, der zwischen Einlass 4 und Auslass 5 herrscht, beaufschlagbar ist und die Grösse des Differenzdrucks $\Delta p$ aus einer Position X des Probekörpers 8 im Hohlraum 71 bestimmbar ist.

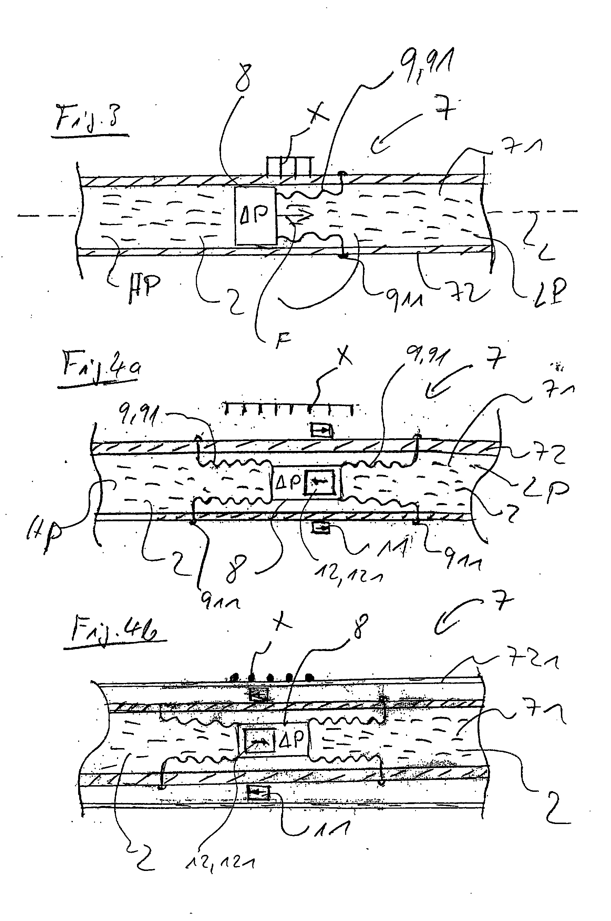

In Fig. 3a ist schematisch ein einfaches Ausführungsbeispiel eines Differenzdruckmessers 7 dargestellt, bei welchem der Hohlraum 71 im wesentlichen durch ein transparentes Rohr 72 gebildet wird, in welchem der Probekörper 8, auf den der Differenzdruck $\Delta p$ im wesentlichen in Richtung einer Längsachse L des Rohrs 72 wirkt, entlang der Längsachse L beweglich angeordnet ist. Der Probekörper 8 wird von einem Federelement 9, das im vorliegenden Beispiel als elastischer Schlauch 91 ausgebildet ist, mit einer mechanischen Rückstellkraft, also einer Federkraft beaufschlagt.

Dabei ist im Rahmen dieser Anmeldung unter einem elastischen Schlauch im wesentlichen ein Balg zu verstehen, der selbst keine bzw. nur eine sehr kleine elastische Federsteifigkeit aufweist und der zur Einstellung einer vorgebbaren elastischen Federsteifigkeit zusätzlich ein entsprechendes Federelement mit einer entsprechenden Federsteifigkeit aufweisen kann.

Dabei steht der darstellungsgemäss linke Hochdruckbereich HP des Hohlraums 71 mit dem Einlass 4 in Verbindung, während der darstellungsgemäss rechte Niederdruckbereich LP des Hohlraums 71 mit dem Auslass 5 der Filtervorrichtung 1 in Verbindung steht. Somit wirkt auf den Probekörper 8 auf Grund des Differenzdrucks Δp eine Schubkraft F, die vom Hochdruckbereich HP in Richtung zum Niederdruckbereich LP, also darstellungsgemäss von links nach rechts gerichtet ist. In einem stationären Zustand wird diese Schubkraft F auf den Probekörper 8 durch die Rückstellkraft des Federelements 9 gerade kompensiert, so dass der Probekörper 8 entlang der Längsachse L eine Auslenkung auf eine Position X erfährt, die eine Funktion des Differenzdrucks Δp ist, so dass aus der Position X, also aus der Auslenkung des Probekörpers 8, die zum Beispiel auf einer am transparenten Rohr 72 angebrachten Skala abgelesen werden kann, auf den Differenzdruck Δp und damit auf den Zustand des Filterelements 6 geschlossen werden kann.

Neben der Wirkung als Federelement 9, das eine Rückstellkraft auf den Probekörper 8 ausübt, erfüllt der elastische Schlauch 91 noch eine weitere wichtige Funktion. Der mit dem Probekörper 8 wirkfest verbundene Schlauch 91 ist nämlich mittels eines Befestigungselements 911 so im Rohr 72 angeordnet und an diesem befestigt, dass der Hochdruckbereich HP dichtend vom Niederdruckbereich LP, und damit der Einlasss 4 dichtend vom Auslass 5 durch den Differenzdruckmesser 7 voneinander getrennt sind. Dadurch wird verhindert, dass zu filterndes Fluid 2, das der Filtervorrichtung 1 durch den Einlass 4 zugeführt wird, durch den Differenzdruckmesser 7 am Filterelement 6 vorbei in den Auslass 5 gelangt, wodurch die Filterwirkung selbstverständlich herabgesetzt würde.

Selbstverständlich ist es in ganz speziellen Fällen auch möglich, dass beispielsweise der Probekörper 8 so ausgestaltet und im Hohlraum 71 angeordnet ist, dass der Probekörper 8 selbst den Hochdruckbereich HP vom Niederdruckbereich LP dichtend trennt. Dann braucht selbstverständlich das Federelement 9 nicht als dichtender elastischer Schlauch 91 ausgebildet zu sein, sondern kann beispielsweise als einfache Feder 9 oder anders aufgebaut sein.

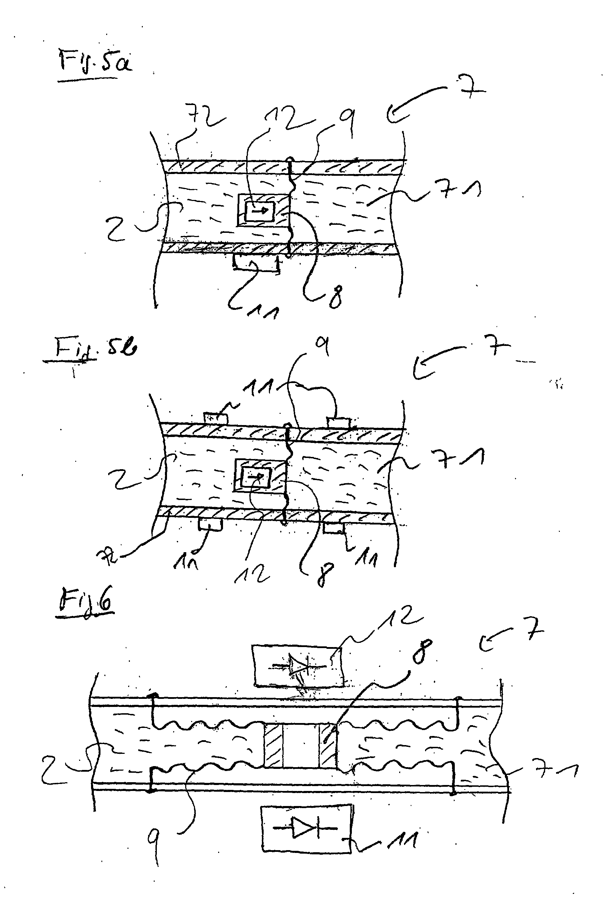

In den Fig. 4a und Fig. 4b sind zwei weitere Ausführungsbeispiele gemäss Fig. 3 mit einem magnetischen Positionssystem dargestellt. Bei den hier gezeigten Ausführungsbeispielen ist der Probekörper 8 beidseitig wirkfest mit je einem elastischen Schlauch 91 verbunden, wobei jeder der beiden Schläuche 91 mittels je eines Befestigungselements 911 so im Rohr 72 angeordnet und an diesem befestigt ist, dass der Hochdruckbereich HP dichtend vom Niederdruckbereich LP, und damit der Einlasss 4 dichtend vom Auslass 5, durch den Differenzdruckmesser 7 voneinander getrennt sind. Dadurch, dass der Probekörper 8 beidseitig je einen elastischen Schlauch 91 aufweist, ist der Probekörper 8 vollständig vom Fluid 2 isoliert. Das kann insbesondere dann von Vorteil sein, wenn das Fluid 2 eine chemisch oder mechanisch aggressive Flüssigkeit ist, beispielsweise eine Flüssigkeit wie Slurry, eine mechanisch aggressive Polierflüssigkeit, die unter anderem in der Halbleiterindustrie Verwendung findet, oder eine Säure oder eine Lauge, die den Probekörper angreifen könnte oder ein anderes aggressives Fluid 2.

Bei den in den Fig. 4a und Fig. 4b dargestellten Ausführungsbeispielen umfasst der Probekörper 8 als Positionsgeber 12 ein magnetisches Element 121, beispielsweise einen Dauermagneten oder ein magnetisierbares Material, wie zum Beispiel Eisen. Aussen am Hohlraum 71, der wie dargestellt als Rohr 72 ausgestaltet sein kann, ist als Positionssensor 11 ein ebenfalls magnetisches Element, zum Beispiel ein Ringmagnet oder ein Eisenring, der das Rohr 72 umfasst, oder ein anders geformter magnetisierbarer bzw. magnetisierter Körper vorgesehen, der über eine magnetische Kraftkopplung mit dem magnetischem Element 121 bei einer Bewegung des Probekörpers 8 mitbewegt wird, so dass beispielsweise an einer Skala die Position X des Positionssensors 11 und damit die Position X des Probekörpers 8 bestimmbar ist. Das Rohr 72 braucht in diesem Fall, anders als in dem in Fig. 3 gezeigten Ausführungsbeispiel selbstverständlich nicht transparent zu sein. Bei dem in Fig. 4b dargestellten Beispiel ist der Sensor 11 zwischen einer transparenten äusseren Hülle 721 und dem Hohlraum 71 angeordnet. Dabei dient die äussere Hülle 721 zum Schutz des Sensors 11 und / oder zu dessen Führung.

Die bisher beschriebenen Ausführungsbeispiele haben den Vorzug, dass der Differenzdruckmesser 7 jeweils ein besonders einfaches Sensorsystem zur Ermittlung des Differenzdrucks Δp aufweist; allerdings ist es mit solchen Sensorsystemen schwierig, den ermittelten Differenzdruck Δp beispielsweise einer Datenverarbeitungsanalge oder eventuell vorhandenen Steuer- oder Regelmitteln unmittelbar zuzuführen. Ausserdem benötigt man in der Regel für eine genügend genaue Bestimmung der Position X und damit des Differenzdrucks Δp einen relativ grossen Hub in der Positionsänderung des Probekörpers 8 bei sich ändernder Druckdifferenz Δp. Das macht natürlich insbesondere die Bestimmung kleiner Druckänderungen zumindest schwierig.

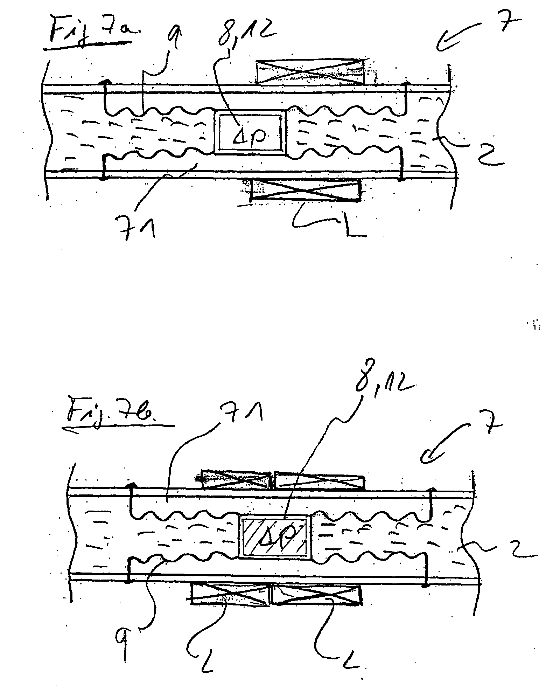

In den Fig. 5a und Fig. 5b sind zwei weitere besonders bevorzugte Ausführungsbeispiele eines Differenzdruckmessers 7 dargestellt, bei welchen der Probekörper 8 als Positionsgeber 12 ein magnetisches Element 121, beispielsweise einen Dauermagneten 121 oder ein magnetisierbares Material 121, wie zum Beispiel Eisen umfasst. Dabei ist auch hier der Probekörper 8 mit einer mechanischen Rückstellkraft durch das Federelement 9 beaufschlagt, wobei das Federelement 9, wie dargestellt, eine Membran, eine Feder 9 oder auch ein elastischer Schlauch 91 gemäss den Fig. 3, Fig. 4a oder Fig. 4b sein kann.

Aussen am Hohlraum 71, der wie dargestellt als Rohr 72 ausgestaltet sein kann, ist ein Positionssensor 11 vorgesehen, mit welchem über eine magnetische Kopplung mit dem magnetischem Element 121 eine Bewegung des Probekörpers 8 detektierbar ist, und so die Position X des Probekörpers 8, bzw. eine Positionsänderung mit hoher Genauigkeit bestimmbar ist. Mittels des Positionssensor 11 kann dabei zum Beispiel ein elektrisches oder optisches Signal zur Verfügung gestellt werden, das einer hier nicht gezeigten Auswerteeinheit zuführbar ist, mit deren Hilfe aus dem Signal des Positionssensors 11 der zugehörige Differenzdruck $\Delta p$ generierbar ist.

Als Positionssensor 11 kommen dabei ganz verschiedene Typen von Sensoren in Frage. Bevorzugt umfasst der Positionssensor 11 einen Magnetfeldsensor 11, insbesondere eine Hallsonde 11, einen Differentialfeldsensor 11, zum Beispiel auf Basis eines GMR-Sensors (Giant Magnetoresistive Sensor), bevorzugt eine GMR-Sensorbrücke, einen LVDT 11 (Linear Variable Differential Transformer) oder einen Wirbelstromsensor 11.

Durch den Einsatz mehrerer Positionsensoren 11, wie exemplarisch in Fig. 5b dargestellt, kann in an sich bekannter Weise, beispielsweise durch Einsatz einer Brückenschaltung, die Messgenauigkeit bei der Bestimmung der Position X des Probekörpers 8 noch enorm gesteigert werden, so dass auch kleinste Änderungen im Differenzdruck $\Delta p$ detektierbar sind. Insbesondere können, wie hier gezeigt, mindestens vier Positionssensoren 11 derart gegenüber am Hohlraum 71 angeordnet sein, dass die Stärke des Signals, bzw. des Differenzsignals der Positionssensoren 11 nur von der axialen Verschiebung des Probekörpers 8 abhängt, wobei eine radiale Verschiebung nicht detektiert wird.

Es versteht sich, dass der Positionssensor 11 nicht zwingend aussen am Hohlraum 71 angeordnet sein muss. Im Speziellen kann der Positionssenor 11 natürlich auch in der Wand des Hohlraums 71 integriert sein oder auch innerhalb des Hohlraums untergebracht sein.

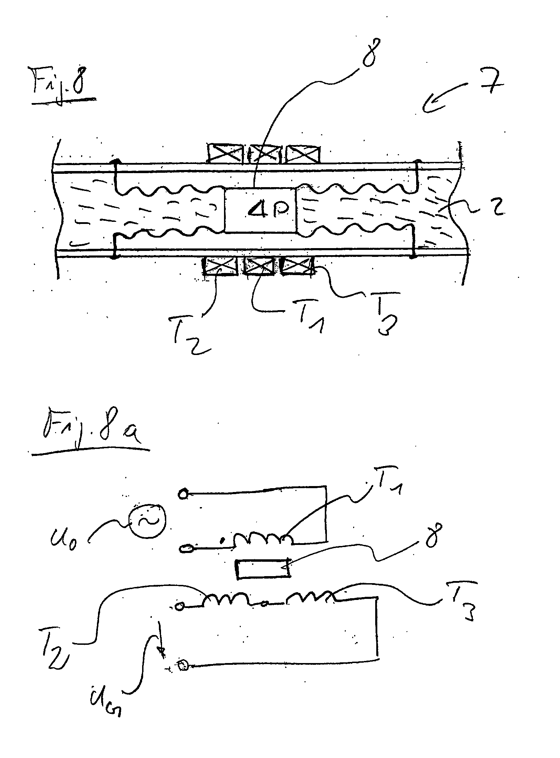

In Fig. 6 ist schematisch ein weiteres Ausführungsbeispiel dargestellt, wobei der Positionssensor 11 und der Positionsgeber 12 ein optisches Positionssystem bilden. Der Positionsgeber 12 ist hier eine Lichtquelle, beispielsweise eine optische Lichtquelle wie zum Beispiel eine Leuchtdiode oder eine Infrarotquelle oder eine Ultraviolettquelle, die einen optischen Signalstrahl aussendet, der vom Positionssensor 11, beispielsweise einer Fotodiode 11 oder einem Fototransistor 11 empfangen werden kann. Dabei ist der optische Signalstrahl in bekannter Weise von der Position X des Probekörpers 8 beeinflussbar, so dass die Position X des Probekörpers bestimmbar ist.

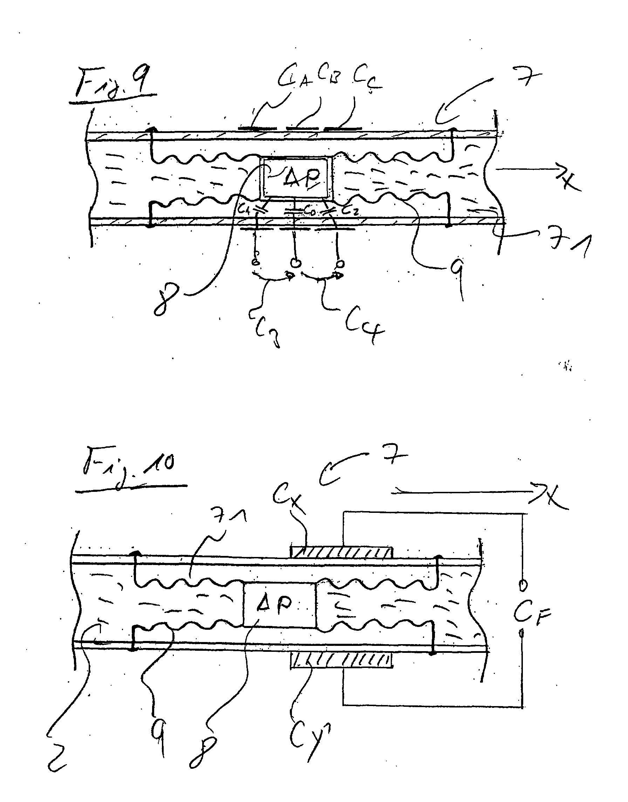

In Fig. 7a ist ein weiteres Ausführungsbeispiel gemäss Fig. 5a dargestellt, wobei als Positionssensor 11 eine Spule L vorgesehen ist, die den Hohlraum 71 im Bereich des Probekörpers 8 umfasst. Der Probekörper 8 fungiert dabei als Positionsgeber 12 und besteht unter anderem aus einem Material, insbesondere aus einem magnetischen oder ferromagnetischen Material, das geeignet ist die Induktivität der Spule L zu ändern, wenn sich die Position X des Probekörpers 8 in Bezug auf die Spule L ändert. Die Induktivität der Spule L wird dabei mit einer geeigneten, hier nicht gezeigten Messeinrichtung gemessen, woraus sich dann wiederum die Druckdifferenz $\Delta p$ ergibt, die bei Verwendung von nur einer Spule L proportional zur Induktivität der Spule L ist, so dass sich damit der Zustand der Filtervorrichtung 1 wiederum bestimmen lässt.

Durch den Einsatz mehrerer Spulen L, wie beispielhaft für zwei Spulen $L_1$ und $L_2$ in Fig. 7b dargestellt, lässt sich in an sich bekannter Weise die Messgenauigkeit für die Position X des Probekörpers 8 und damit für den Differenzdruck $\Delta p$ noch weiter steigern. Bei der in Fig. 7b gezeigten Anordnung ist der Differenzdruck proportional zum Quotienten der Induktivitäten der Spulen $L_1$ und $L_2$.

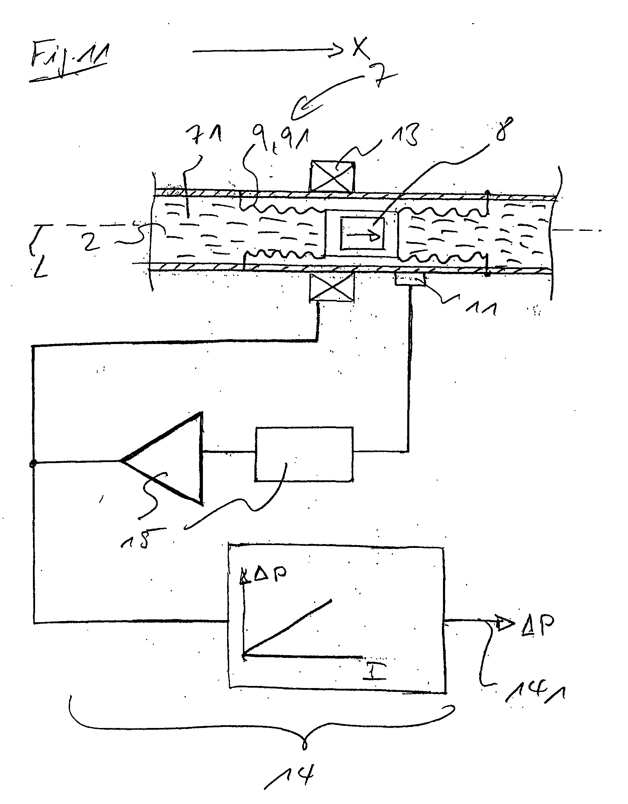

In Fig. 8 ist eine andere Sensor- bzw. Messanordnung, die häufig auch als Differentialtransformator (LVDT) bezeichnet wird, schematisch dargestellt. Im Bereich des Probekörpers 8 sind, den Hohlraum 71 umfassend, nebeneinander drei Spulen T1, T2 und T3 angeordnet, die einen Differentialtransformator bilden. Die Fig. 8a zeigt schematisch das elektrische Schaltbild des Differentialtransformators gemäss Fig. 8, dessen Funktionsweise im folgenden kurz erläutert werden soll. Differentialtransformatoren (LVDT = Linear Variable Differential Transformer) sind induktive Weggeber mit sehr hohen Auflösungen. Er besteht aus der Primärwicklung der Spule T1, an die eine Wechselspannung $U_0$ angelegt wird, und den zwei identisch gegenphasig zueinander geschalteten Sekundärwicklungen der Spule T2 und Spule T3. Der verschiebbare magnetische Probekörper 8, der beispielsweise einen Eisenkern haben kann, beeinflusst bei einer Änderung seiner Position X im Hohlraum 71 die Kopplung zwischen den Spulen. Steht der Kern genau in der Mitte zwischen den Spulen T2 und T3, sind die induzierten Spannungen in den Spulen T2 und T3 entgegengesetzt genau gleich und die resultierende Gesamtspannung $U_G$ verschwindet identisch zu null. Wird der Probekörper 8 jedoch aus seiner Nullage an eine andere Position X bewegt, ergibt sich eine resultierende Gesamtspannung UG, die verschieden von Null ist, wobei sich die Richtung der Verschiebung des Probekörpers 8 aus der Phasenlage zwischen angelegter Wechselspannung $U_0$ und Gesamtspannung $U_G$ ergibt.

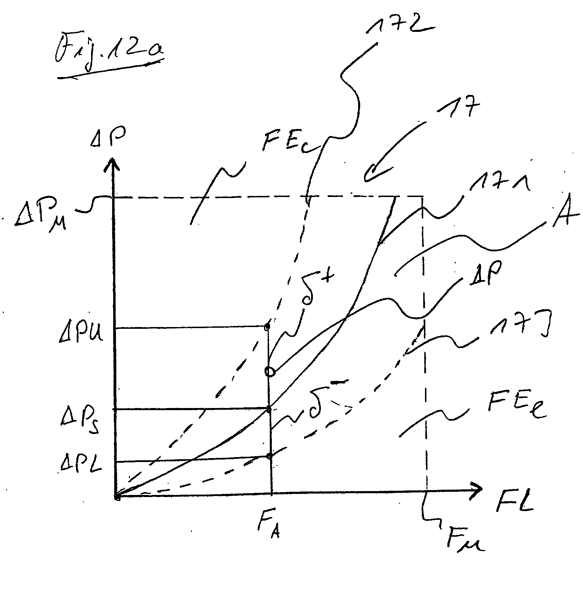

In den Fig. 9 und Fig. 10 sind zwei weitere spezielle Ausführungsbeispiele eines Differenzdruckmessers 7 einer erfindungsgemässen Filtervorrichtung 1 schematisch dargestellt, welche ein elektrisches Positionssystem, im Speziellen ein kapazitiv gekoppeltes Positionssystem aufweisen.

Bei dem Ausführungsbeispiel gemäss Fig. 9 sind im Bereich des Probekörpers 8, den Hohlraum 71 umfassend, nebeneinander drei, bevorzugt ringförmige Kondensatorplatten $C_A$, $C_B$ und $C_C$ angeordnet, die gemeinsam mit dem elektrisch leitenden Positionskörper 8 ein kapazitives System bilden, das schematisch durch das Ersatzschaltbild mit den Kondensatoren $C_0$, $C_1$ und $C_2$ zu Verdeutlichung dargestellt ist. Durch eine Änderung der Position X des Probekörpers 8 im Hohlraum 71 in Bezug auf die Kondensatorplatten $C_A$, $C_B$ und $C_C$, ändert sich das Verhältnis der Kapazität $C_3$ der Serienschaltung $C_0$ und $C_1$ in Bezug auf die Kapazität $C_4$ der Serienschaltung aus $C_0$ und $C_2$. Das heisst, bei Veränderung der Position X des Probekörpers 8 ändert sich der Quotient aus der Kapazität $C_3$ und $C_4$, so dass der Differenzdruck $\Delta p$ eine Funktion dieses Kapazitätsverhältnisses ist. Somit kann durch Messung der Kapazitäten $C_3$ und $C_4$, eventuell unter Zuhilfenahme entsprechender Eichmessungen, der Differenzdruck $\Delta p$ mit grosser Genauigkeit bestimmt werden.

In Fig. 10 ist ein zweites Ausführungsbeispiel eines kapazitiven Positionssystems dargestellt. Bei diesem Beispiel ist ein, nicht unbedingt ebener, Plattenkondensator im Bereich des Probekörpers 8 am Hohlraum 71 ausgebildet, zwischen dessen Platten $C_x$ und $C_y$ der Probekörper 8 beweglich angeordnet ist. Der Probekörper 8, der bevorzugt ein Material mit einer hoher Dielektrizitätskonstanten umfasst, verändert die Kapazität $C_F$ des Plattenkondensators, wenn er seine Position X aufgrund einer Änderung des Differenzdrucks $\Delta p$ in Bezug auf die Platten $C_x$ und $C_y$ des Kondensators ändert. Somit ist durch Messung der Kapazität $C_F$ wiederum der Differenzdruck $\Delta p$ und damit der Zustand der Filtervorrichtung 1 bestimmbar. Eine besonders hohe Empfindlichkeit lässt sich in dieser Anordnung erreichen, wenn der Probekörper 8 als Dielektrikum ein ferroelektrisches Material umfasst. Solche Materialien können enorm hohe Dielektrizitätskonstanten aufweisen, so dass schon bei sehr kleinen Änderungen der Position X des Probekörpers 8 in Bezug auf den am Hohlraum 71 angeordneten Kondensator sehr hohe Änderungen der Kapazität $C_F$ hervorgerufen werden, so dass Änderungen im Differenzdruck $\Delta p$ mit enorm hoher Genauigkeit bestimmbar sind.

Allen bisher diskutierten Ausführungsbeispielen einer erfindungsgemässen Filtervorrichtung 1 ist gemeinsam, dass eine Änderung im Differenzdruck $\Delta p$ mittels des Differenzdruckmessers 7 aus einer Änderung der Position X des Probekörpers 8 bestimmbar ist. In bestimmten Fällen kann es jedoch notwendig oder wünschenswert sein, dass sich die Position X des Probekörpers 8 bei einer Änderung des Differenzdrucks $\Delta p$ nicht ändert, sondern der Probekörper 8 auch bei einer Druckveränderung an seiner Position X verbleibt. So kann beispielsweise bei ständiger sich ändernder Deformation des Federelements 9 Materialermüdung auftreten, insbesondere dann, wenn das Federelement 9 beispielsweise aus einem der oben bereits erwähnten Kunststoffe besteht, die auch das Filterelement 6 bilden können. Diese Kunststoffe und auch andere Materialien können nämlich, vor allem wenn weitere Belastungen wie Temperaturbelastungen oder Kontakt mit chemisch aggressiven Fluiden usw. auftreten, zum Fliessen neigen, so dass sich die Elastizität des Federelements 9 mit der Zeit ändern kann, d.h. dass sich die wirksame effektive Federkonstante ändern kann, wodurch eine sichere Auswertung des Differenzdruck $\Delta p$ über längere

Zeiträume nicht mehr möglich wäre.

Daher wir als eine weitere Variante einer erfindungsgemässen Filtervorrichtung1 eine solche mit einem Differenzdruckmesser 7 vorgeschlagen, wobei der Differenzdruck $\Delta p$ aus einer Nullage an einer vorgebbaren Position X des Probekörpers 8 ermittelbar ist, wobei auf den Probekörper 8 eine magnetische Kraft derart ausübbar ist, dass der Probekörper 8 auch bei einer Veränderung des Differenzdrucks $\Delta p$ in seiner Nullage verbleibt.

Wie in Fig. 11 dargestellt, umfasst der Differenzdruckmesser 7 ebenfalls den Hohlraum 71, in welchem der Probekörper 8, analog zu Fig. 10 entlang der Längsachse L beweglich angeordnet ist, wobei die beiden Schläuche 91 in dem vorliegenden Beispiel lediglich dichtende Funktion haben und im wesentlichen keine mechanischen Rückstellkräfte ausüben. Der Differenzdruckmesser 7 umfasst weiter einen Elektromagneten 13 zum Ausüben einer Magnetkraft auf den Probekörper 8, die im wesentlichen in axialer Richtung auf den Probekörper 8 wirkt. Der Elektromagnet 13 umfasst eine Spule, die in an sich bekannter Weise in Umfangsrichtung an der Aussenwand des Hohlraums 71 angeordnet ist. Bei Erregung des Elektromagneten 13 mit einem elektrischen Strom kann der Elektromagnet 13 mit dem magnetischen Probekörper 8 in Wechselwirkung treten und auf diesen eine Lorentzkraft $\vec{F} = \vec{B} \times \vec{I}$ ausüben und so den Probekörper 8 in einer definierten Nulllage halten. Dabei ist wie üblich $\vec{B}$ die magnetische Flussdichte und $\vec{I}$ der elektrische Strom durch die Spule des Elektromagneten 13.

Die Position X des Probekörpers 8 im Hohlkörper 3 ist durch die beiden Positionssensoren 11 bestimmbar, die zum Beispiel an der Aussenwand des Hohlraums 71 so angeordnet sind, dass sie eine Position X und / oder eine Änderung der Position X des Probekörpers 8 detektieren können. Die Positionssensoren 11 sind mit einer Ansteuereinheit 14 signalverbunden, wobei die Ansteuereinheit 14 Regelmittel 15 umfasst, welche mit Hilfe eines Signals des Positionssensors 11 den Elektromagneten 13 derart ansteuern, dass der magnetische Probekörper 8 gegen den Differenzdruck $\Delta p$ des strömenden Fluids 2 in der vorgebbaren Position X, bevorzugt in seiner Nullage, gehalten wird. Die Ansteuereinheit 14 kann eine Auswerteeinheit umfassen, welche mit Hilfe der für die Erregung des Elektromagneten 13 notwendigen elektrischen Stroms, den Differenzdruck $\Delta p$ des Fluids 2 auf den Probekörper 8 über eine Ausgabeeinheit 141 ausgibt und den Zustand der Filtervorrichtung 1 bzw. des Filterelements 6 anzeigt. Das heisst, dass aus einem Steuerstrom für den Elektromagneten 13 der Differenzdruck $\Delta p$ bestimmt werden kann. Dabei kann die Auswerteeinheit 141 zur Speicherung der Differenzdruckdaten bzw. zur Speicherung der zeitlichen Entwicklung des Zustandes der erfindungsgemässen Filtervorrichtung 1 mit einer hier nicht gezeigten Speichereinheit verbunden sein.

Um aus dem gemessenen Differenzdruck den Zustand der Filtervorrichtung 1 bestimmen zu können, muss für eine gegebene Filtervorrichtung 1 ein entsprechendes Filtermodell 17 zugrunde gelegt werden, mit welchem aus einem aktuellen Durchfluss $F_A$ des Fluids 2 durch die Filtervorrichtung 1 und dem gemessenen Differenzdruck $\Delta p$ der Zustand der Filtervorrichtung 1 bestimmbar ist. Dabei kann der aktuelle Durchfluss $F_A$ durch die Filtervorrichtung 1 zum Beispiel mit einem an sich bekannten Durchflussmesser 16 bestimmt werden, oder aber der aktuelle Durchfluss $F_A$ wird durch eine geeignete Einrichtung auf einem konstanten Wert gehalten oder der aktuelle Durchfluss $F_A$ kann aufgrund anderer bekannter Betriebsparameter oder Vorrichtungsparameter bekannt sein oder berechnet werden.

In Fig. 12a ist ein Filtermodell 17 in Form eines Durchfluss FL / Differenzdruck $\Delta p$ Diagramms 17 für eine Filtervorrichtung 1 schematisch dargestellt. Im Diagramm 17 ist durch die Filterkurve 171 ein Zusammenhang zwischen dem Durchfluss FL und dem Differenzdruck $\Delta p$ dargestellt, wie er für eine gegebene Filtervorrichtung 1 mit einem neuen Filterelement idealerweise Gültigkeit hat. Die Filterkurve 171 kann dabei beispielsweise unter Zuhilfenahme von genormten Filterelementen aus Eichmessungen oder durch mathematische Modellrechnungen oder Simulationen erstellt werden, oder auch vom Hersteller der Filtervorrichtung 1 oder des Filterelements 6 vorgegeben werden. Wie die Filterkurve 171 des Filtermodells 17 zeigt, steigt der Differenzdruck $\Delta p$ mit steigendem Durchfluss FL selbstverständlich auch bei einem neuen Filterelement 6 stetig an. Sehr häufig ergibt sich ein im wesentlichen quadratischer Anstieg des Differenzdruck $\Delta p$ mit steigendem Durchfluss FL. Dabei darf auch bei einem neuen, unbeschädigten Filterelement 6 ein maximaler Durchfluss $F_M$ und / oder ein maximaler Differenzdruck $\Delta P_M$ nicht überschritten werden, da sonst die Belastung der Filtervorrichtung 1 bzw. des Filterelements 6 zu gross wird, was zu Schädigungen der Filtervorrichtung 1, beispielsweise zum Zerreissen des Filterelements 6 oder anderen Beeinträchtigungen führen kann.

Wenn die Filtervorrichtung 1 mit einem neuen Filterelement 6 ausgestattet ist und mit einem aktuellen Durchfluss $F_A$ des Fluids 2 betrieben wird, ist diesem Wert des Durchflusses $F_A$ ein Sollwert $\Delta p_S$ des Differenzdrucks $\Delta p$ zugeordnet. Bei einer einwandfrei funktionierenden Filtervorrichtung 1 mit neuem Filterelement 6 wird der Sollwert $\Delta p_S$, abgesehen von Fertigungs- und Gerätetoleranzen, bei einem gegebenen aktuellen Durchfluss $F_A$ auch am Differenzdruckmesser 7 anliegen und wird von diesem auch gemessen werden. Im Betrieb wird sich mit der Zeit zunehmend ausgefilterte Substanz am Filterelement 6 ablagern, so dass die effektive Durchflussfläche des Filterelements 6, die das Fluid 2 im Betriebszustand durchströmen kann, immer kleiner wird, so dass bei einem gegebenen Wert des aktuellen Durchflusses $F_A$ der Differenzdruck $\Delta p$ ansteigt. Der zulässige maximale Differenzdruck $\Delta p_U$, bis zu dem eine Filtervorrichtung 1 noch betrieben werden kann, wird durch einen Ablagerungsfaktor $\delta^+$ bestimmt. Dabei ergibt sich der maximal zulässige Differenzdruck $\Delta p_U$ durch Multiplikation des zum aktuellen Durchfluss $F_A$ gehörenden Sollwert $\Delta p_S$, wie er für ein neues Filterelement 6 erwartet wird, mit dem Ablagerungsfaktor $\delta^+$. D.h. in Formeln: $\Delta p_U = \Delta p_S \times \delta^+$. Dieser Zusammenhang gilt selbstverständlich für einen beliebigen erlaubten Wert des aktuellen Durchflusses $F_A$, wobei der Ablagerungsfaktor $\delta^+$ für alle erlaubten aktuelle Werte des Durchflusses $F_A$ ein im wesentlichen konstanter Faktor ist.

Dabei ist es selbstverständlich auch möglich, dass an der Filtervorrichtung 1, insbesondere am Filterelement 6 mit fortschreitender Betriebsdauer ein Verschleiss auftritt, der zu einem Abfall des Sollwerts $\Delta p_S$ des Differenzdrucks $\Delta p$ führt. So kann beispielsweise durch die verschiedenen Belastungen, die im Betrieb auftreten können, wie mechanische Belastungen, Verschleiss durch chemisch aggressive Stoffe, Temperaturbelastungen und vieles andere mehr, die Filterwirkung dadurch nachlassen, weil sich beispielsweise die Poren mit der Zeit aufweiten oder das Filterelement 6 reisst, so dass grössere Poren entstehen. Das hat zur Folge, dass der Differenzdruck $\Delta p$ stetig mit fortschreitender Betriebsdauer oder auch spontan, zum Beispiel bei einem Riss des Filterelements 6 oder einer plötzlich auftretenden Undichtigkeit der Filtervorrichtung 1, abfällt. Der zulässige minimale Differenzdruck $\Delta p_L$, bis zu dem eine Filtervorrichtung 1 noch betrieben werden kann, wird in diesem Fall durch einen Verschleissfaktor $\delta^-$ bestimmt. Dabei ergibt sich der minimal zulässige Differenzdruck $\Delta p_L$ durch Multiplikation des zum aktuellen Durchfluss $F_A$ gehörenden Sollwert $\Delta p_S$, wie er für ein neues Filterelement 6 erwartet wird, mit dem Verschleissfaktor $\delta^-$. D.h. in Formeln: $\Delta p_L = \Delta p_S \times \delta^-$. Dieser Zusammenhang gilt selbstverständlich für einen beliebigen erlaubten Wert des aktuellen Durchflusses $F_A$, wobei der Verschleissfaktor $\delta^-$ für alle erlaubten aktuelle Werte des Durchflusses $F_A$ bevorzugt ein im wesentlichen konstanter Faktor ist, der natürlich im Speziellen in Abhängigkeit von verschiedenen Betriebsparametern, wie der Temperatur des Fluids 2, der Art des Fluids 2 oder auch dem Wert des aktuellen Durchflusses $F_A$ oder anderer Parameter variieren kann. Das gilt selbstverständlich auch für den Ablagerungsfaktor $\delta^+$.

Somit ergibt sich der im Diagramm 17 dargestellte Arbeitsbereich A, der im wesentlichen durch die Kurven 172 und 173, sowie durch den maximalen Durchfluss $F_M$ und die maximal zulässige Differenzdruck $\Delta P_M$, begrenzt wird, in dem die Filtervorrichtung 1 betrieben werden kann. Ergibt sich bei einem gegebenen aktuellen Durchfluss $F_A$ ein Wert des Differenzdrucks $\Delta p$, der ausserhalb des Arbeitsbereichs A liegt, muss der Betrieb der Filtervorrichtung 1 eingestellt werden und beispielsweise das Filterelement 6 ausgetauscht oder es müssen andere Wartungsarbeiten ausgeführt werden.

In Fig. 12b ist schematisch ein Blockschaltbild einer Regelvorrichtung 18 zur Auswertung des Filtermodells 17 dargestellt. Aus dem aktuellen Wert des Durchflusses $F_A$, der beispielsweise durch den Durchflussmesser 16 ermittelt wird, wird unter Zuhilfenahme des Filtermodells 17 der zugehörige Sollwert $\Delta p_S$ des Differenzdrucks $\Delta p$ generiert. Der so ermittelte Sollwert $\Delta p_S$ des Differenzdrucks $\Delta p$ wird einerseits mit dem Ablagerungsfaktor $\delta^+$ multipilziert, woraus sich der zugehörige maximal zulässige Differenzdruck $\Delta p_U$ ergibt und anderseits mit dem Verschleissfaktor $\delta^-$ multipliziert, woraus sich der zulässige minimale Differenzdruck $\Delta p_L$, ergibt. Der maximal zulässige Differenzdruck $\Delta p_U$ wird sodann im Komparator $K_1$ mit dem von dem Differenzdruckmesser 7 aktuell gemessenen Wert des Differenzdrucks $\Delta p$ verglichen. Ist der Differenzdruck $\Delta p$ grösser als der maximal zulässige Differenzdruck $\Delta p_U$, wird ein Signal S generiert, wodurch zum Beispiel der Betrieb der Filtervorrichtung unterbrochen wird, oder über eine geeignete Einrichtung einem Benutzer der Zustand der Filtervorrichtung 1 zur Kenntnis gebracht wird. Parallel dazu wird minimale Differenzdruck $\Delta p_L$ im Komparator $K_2$ mit dem von dem Differenzdruckmesser 7 aktuell gemessenen Wert des Differenzdrucks $\Delta p$ verglichen. Ist der Differenzdruck $\Delta p$ kleiner als der minimal zulässige Differenzdruck $\Delta p_L$, wird ebenfalls ein Signal S generiert, wodurch zum Beispiel der Betrieb der Filtervorrichtung unterbrochen wird, oder über eine geeignete Einrichtung einem Benutzer der Zustand der Filtervorrichtung 1 zur Kenntnis gebracht wird.

Insbesondere ist es auch möglich, dass auf diese Weise automatisch der Austausch des Filterelements 6 über hier nicht gezeigte Signalleitungen initiiert wird. So kann beispielsweise über eine Telekommunikationsverbindung oder über das Internet ein Wartungsdienst automatisch benachrichtigt werden oder die Bestellung von neuen Filterelementen 6 oder andere Ersatzteilen automatisch eingeleitet werden.

Dadurch, dass bei der erfindungsgemässen Filtervorrichtung durch Messung des Differenzdrucks der Zustand des Filterelements ständig überwacht wird, eignet sich die Filtervorrichtung insbesondere zur Filterung von mechanisch und / oder chemisch sehr aggressiven Fluiden, die das Filterelement stark belasten und zu vorzeitigem Verschleiss, und häufig auch zu spontan auftretenden Schäden führen können, die beispielsweise in Form von zeitlich fest vorgegeben Wartungsintervallen nicht überwachbar sind. Beispiele für solche Fluide sind unter anderem Säuren oder Laugen, die stark ätzend wirken und das Filterelement in unkontrollierbarer Weise angreifen können. Ein anderes Beispiel sind mechanisch aggressive Polierflüssigkeiten, wie "Slurry" das unter anderem zur Politur von Halbleiter-Wavern in der Halbleiterindustrie verwendet wird. Solche Polierflüssigkeiten haben naturgemäss stark abrasive Eigenschaften, die natürlich auch das Filterelement einer Filtervorrichtung entsprechend schädigen können, so dass es zum Beispiel zum Aufweiten der Poren kommen kann, was zu verheerenden Schäden führen kann. Anderseits enthalten solche Flüssigkeiten in der Regel Partikel, die nicht selten zum Verklumpen neigen, so grössere Partikel bilden, die das Filterelement verstopfen können. Ein weiteres Beispiel stellt die Filterung von Blut dar, das zum Gerinnen neigt, wodurch ebenfalls eine höhere Verstopfungsgefahr des Filters gegeben ist. Das gleiche gilt, wenn die Filtervorrichtung bei sogenannten Polymerremoval eingesetzt wird.

Besonders eignet sich die erfindungsgemässe Filtervorrichtung in ihren vielfältigen Ausführungsformen auch dann, wenn die Konzentration der aus dem Fluid zu filternden Substanzen stark schwankt, so dass die Lebensdauer des Filterelements nicht pauschal abschätzbar ist, sondern je nach Einsatz stark schwankt. Dadurch, dass der Zustand der Filtervorrichtung ständig überwachbar ist, kann das Filterelement bis zum Erreichen seiner tatsächlichen Verschleissgrenze betrieben werden. Damit werden insbesondere auch flexiblere Wartungsintervalle möglich, was letztlich zu einem flexibleren Einsatz der Filtervorrichtung und damit zu erheblichen Kostenersparnissen führt.

Da der sich verändernde, das heisst der sich verschlechternde Zustand des Filters laufend beobachtet werden kann, kann insbesondere auch lange bevor das Filterelement tatsächlich seine Verschleissgrenze erreicht hat, der Austausch des Filterelements im voraus geplant werden, so dass ein laufender Prozess nicht unterbrochen werden muss, sondern das Filterelement während einer geeignet gewählten Prozesspause austauschbar ist. So kann insbesondere auch einem unerwarteten Unterbruch eines Produktions- oder Verfahrensprozesses vorgebeugt werden, wodurch möglichen Schäden an Maschinenteilen oder zu bearbeitenden Produkten vorgebeugt werden kann.

Nicht zuletzt kann durch den Einsatz von speziellen Ausführungsvarianten der erfindungsgemässen Filtervorrichtung auch automatisch der Zustand des Filterelements beispielsweise über eine Telekommunikationsverbindung oder über das Internet überwacht und ein Wartungsdienst automatisch benachrichtigt werden oder die Bestellung von neuen Filterelementen oder andere Ersatzteilen automatisch eingeleitet werden.

**Patentansprüche**

1. Filtervorrichtung zum Ausfiltern von Substanzen aus einem Fluid (2), umfassend ein Filtergehäuse (3) mit einem Einlass (4) und einem Auslass (5) für das zu filternde Fluid (2), ein Filterelement (6), das im Betriebszustand vom Fluid (2) durchströmt wird, wobei das Filterelement (6) so ausgestaltet und derart im Filtergehäuse (3) angeordnet ist, dass das Filterelement (6) den Einlass (4) und den Auslass (5) dichtend voneinander trennt, **dadurch gekennzeichnet, dass** zwischen dem Einlass (4) und dem Auslass (5) des Filtergehäuses (3) zur Messung eines Differenzdrucks ($\Delta p$) ein Differenzdruckmesser

(7) vorgesehen ist.

2. Filtervorrichtung nach Anspruch 1, wobei der Differenzdruckmesser (7) so ausgestaltet und derart zwischen Einlass (4) und Auslass (5) angeordnet ist, dass der Differenzdruckmesser (7) den Einlass (4) und den Auslass (5) dichtend voneinander trennt.

3. Filtervorrichtung nach Anspruch 1 oder 2, wobei der Differenzdruckmesser (7) einen Hohlraum (71) umfasst, in welchem ein mit einer Rückstellkraft beaufschlagbarer Probekörper (8) derart beweglich angeordnet ist, dass der Probekörper (8) mit dem Differenzdruck ($\Delta$p) zwischen Einlass (4) und Auslass (5) beaufschlagbar ist und die Grösse des Differenzdrucks ($\Delta$p) aus einer Position (X) des Probekörpers (8) im Hohlraum (71) bestimmbar ist.

4. Filtervorrichtung nach einem der vorangehenden Ansprüche, wobei der Probekörper (8) mittels eines Federelements (9) mit einer mechanischen Rückstellkraft beaufschlagbar ist.

5. Filtervorrichtung nach einem der vorangehenden Ansprüche, bei welcher der Probekörper (8) mittels eines magnetischen Rückstellelements (10) mit einer magnetischen Rückstellkraft beaufschlagbar ist.

6. Filtervorrichtung nach einem der vorangehenden Ansprüche, bei welcher mindestens ein Positionssensor (11) zur Bestimmung der Position (X) des Probekörpers (8) vorgesehen ist.

7. Filtervorrichtung nach einem der vorangehenden Ansprüche, bei welchem der Probekörper (8) einen Positionsgeber (12) zum Zusammenwirken mit dem Positionssensor (11) aufweist.

8. Filtervorrichtung nach einem der vorangehenden Ansprüche, wobei der Positionssensor (11) und / oder der Positionsgeber (12) ein optisches Positionssystem ist.

9. Filtervorrichtung nach einem der vorangehenden Ansprüche, wobei der Positionssensor (11) und / oder der Positionsgeber (12) ein magnetisches und / oder ein elektrisches Positionssystem ist.

10. Filtervorrichtung nach einem der vorangehenden Ansprüche, wobei ein Elektromagnet (13) zum Ausüben einer Magnetkraft auf den Probekörper (8), sowie eine Ansteuereinheit (14) für den Elektromagneten (13) vorgesehen sind und die Ansteuereinheit (14) Regelmittel (15) umfasst, welche mit Hilfe eines Signals des Positionssensors (11) den Elektromagneten (13) derart ansteuert, dass der Probekörper (8) an der Position (X) im Hohlraum (71) fixierbar ist.

11. Filtervorrichtung nach einem der vorangehenden Ansprüche, bei welcher die Regelmittel (15) einen elektronischen Regler umfassen, der als PD-Regler, als PID-Regler oder als Zustandsregler ausgestaltet ist.

12. Filtervorrichtung nach einem der vorangehenden Ansprüche, wobei zur Messung eines Durchflusses (FL) des Fluids (2) ein Durchflussmeser (16) vorgesehen ist.

13. Verfahren zur Beurteilung des Zustands einer Filtervorrichtung (1) zum Ausfiltern von Substanzen aus einem Fluid (2), welche Filtervorrichtung (1) ein Filtergehäuse (3) mit einem Einlass (4) und einem Auslass (5) für das zu filternde Fluid (2), sowie ein Filterelement (6), das im Betriebszustand vom Fluid (2) durchströmt wird, umfasst, wobei das Filterelement (6) so ausgestaltet und derart im Filtergehäuse (3) angeordnet ist, dass das Filterelement (6) den Einlass (4) und den Auslass (5) dichtend voneinander trennt, **dadurch gekennzeichnet, dass** mittels eines Differenzdruckmessers (7), der zwischen dem Einlass (4) und dem Auslass (5) des Filtergehäuses (3) vorgesehen ist, ein Differenzdruck ($\Delta$p) bestimmt wird und der Differenzdruck ($\Delta$p) zur Beurteilung des Zustands des Filterelements (6) herangezogen wird.

14. Verfahren nach Anspruch 13, wobei der Differenzdruckmesser (7) einen Hohlraum (71) umfasst, in welchem ein beweglich angeordneter Probekörper (8) mit einer Rückstellkraft und mit dem Differenzdruck ($\Delta$p) zwischen Einlass (4) und Auslass (5) beaufschlagt wird und die Grösse des Differenzdrucks ($\Delta$p) aus einer Position (X) des Probekörpers (8) im Hohlraum (71) bestimmt wird.

15. Verfahren nach einem der Ansprüche 13 bis 14, bei welchem der Probekörper (8) mittels eines Federelements (9) mit einer mechanischen Rückstellkraft beaufschlagt wird und / oder der Probekörper (8) mittels eines magnetischen Rückstellelements (10) mit einer magnetischen Rückstellkraft beaufschlagt wird.

16. Verfahren nach einem der Ansprüche 13 bis 15, bei welchem mittels eines Positionssensor (11) die Position (X) des Probekörpers (8) im Hohlraum (71) bestimmt wird.

17. Verfahren nach einem der Ansprüche 13 bis 16, bei welchem die Position (X) des Probekörper (8) durch das Zusammenwirken eines Positionsgebers (12) mit dem Positionssensor (11) bestimmt wird.

18. Verfahren nach einem der Ansprüche 13 bis 17, wobei die Position (X) des Probekörpers (8) optisch bestimmt wird.

19. Verfahren nach einem der Ansprüche 13 bis 18, wobei die Position (X) des Probekörpers (8) magnetisch und / oder elektrisch bestimmt wird.

20. Verfahren nach einem der Ansprüche 13 bis 19, wobei mittels eines Elektromagneten (13) eine Magnetkraft auf den Probekörper (8) ausgeübt wird, und der Elektromagnet (13) von einer Ansteuereinheit (14), die Regelmittel (15) umfasst, mit Hilfe eines Signals des Positionssensors (11) derart angesteuert wird, dass der Probekörper (8) an einer vorgebbaren Position (X) im Hohlraum (71) fixiert wird.

21. Verfahren nach Anspruch 20, bei welchem aus einem Steuerstrom für den Elektromagneten (13) der Differenzdruck ($\Delta$p) bestimmt wird.

22. Verfahren nach einem der Ansprüche 13 bis 21, bei welchem mittels eines Durchflussmessers (16) ein Durchfluss (FL) des Fluids (2) durch die Filtervorrichtung (1) bestimmt wird.

23. Verfahren nach einem der Ansprüche 13 bis 22, bei welchem über eine Signalverbindung, insbesondere über eine Telekommunikationsverbindung oder über das Internet ein Wartungsdienst für die Wartung der Filtervorrichtung (1) automatisch benachrichtigt wird und / oder die Bestellung von neuen Filterelementen (6) und / oder andere Ersatzteilen automatisch eingeleitet wird.

Fig. 1

Fig. 3

Fig. 3

Fig. 4a

Fig. 4b

Fig. 5a

Fig. 5b

Fig. 6

Fig 7a.    9    8,12    7

ΔP    2

71    L

Fig. 7b.    71    8,12    7

ΔP    2

9    L    L

EP 1 479 426 A1

**Fig.8**

8

7

ΔP

2

$T_2$

$T_1$

$T_3$

**Fig.8a**

$T_1$

$U_0$

8

$T_3$

$T_2$

$U_G$

19

Fig. 9

Fig. 10

Fig.11

Fig.12a

Fig. 12b

EP 1 479 426 A1

**Europäisches Patentamt**

**EUROPÄISCHER RECHERCHENBERICHT**

Nummer der Anmeldung

EP 03 40 5353

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 3 794 168 A (PERKINS G) 26. Februar 1974 (1974-02-26) * Zusammenfassung; Abbildung 1 * * Spalte 1, Zeile 15 - Zeile 30 * --- | 1-4,6,9, 13-17,19 | B01D35/143 |
| X | GB 2 311 860 A (ABSOLON ERIC WILLIAM) 8. Oktober 1997 (1997-10-08) * Seite 2, Zeile 26 - Seite 3, Zeile 25; Abbildung 1 * --- | 1-4, 12-15, 18,22 | |
| X | US 4 654 140 A (CHEN YEN-MING) 31. März 1987 (1987-03-31) * Spalte 4, Zeile 1 - Zeile 40; Abbildungen 1-10 * --- | 1-5, 13-15 | |
| X | WO 88 03047 A (MP FILTRI SRL ;PASOTTO BRUNO (IT)) 5. Mai 1988 (1988-05-05) * Seite 2, Zeile 19 - Seite 3, Zeile 22; Abbildungen 1-3 * --- | 1-4,13, 14 | |
| X | US 4 139 466 A (ROSAEN NILS O) 13. Februar 1979 (1979-02-13) * Spalte 1, Zeile 53 - Spalte 2, Zeile 19; Abbildungen 1-5 * --- | 1,2,4,13 | RECHERCHIERTE SACHGEBIETE (Int.Cl.7) B01D |
| X | WO 01 52185 A (DWORATZEK KLEMENS ;FRANZ ANDREAS (DE); ESCHER HORST (DE); PELZ AND) 19. Juli 2001 (2001-07-19) * Seite 6, Zeile 4 - Zeile 7; Abbildung 3 * --- | 1,2,13, 23 | |
| X | US 4 332 679 A (GROSSPIETSCH WOLFGANG ET AL) 1. Juni 1982 (1982-06-01) * Spalte 2, Zeile 40 - Zeile 55; Abbildungen 1-3 * ----- | 1,2,13 | |

Der vorliegende Recherchenbericht wurde für alle Patentansprüche erstellt

| Recherchenort | Abschlußdatum der Recherche | Prüfer |
|---|---|---|
| MÜNCHEN | 28. August 2003 | Sembritzki, T |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 03 40 5353

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-08-2003

| Im Recherchenbericht angeführtes Patentdokument | Datum der Veröffentlichung | Mitglied(er) der Patentfamilie | Datum der Veröffentlichung |
|---|---|---|---|
| US 3794168 A | 26-02-1974 | CA 996659 A1<br>DE 2335276 A1<br>GB 1413366 A<br>JP 49058466 A | 07-09-1976<br>14-02-1974<br>12-11-1975<br>06-06-1974 |
| GB 2311860 A | 08-10-1997 | KEINE | |
| US 4654140 A | 31-03-1987 | KEINE | |
| WO 8803047 A | 05-05-1988 | IT 1213509 B<br>EP 0330651 A1<br>FI 891908 A<br>WO 8803047 A1 | 20-12-1989<br>06-09-1989<br>21-04-1989<br>05-05-1988 |
| US 4139466 A | 13-02-1979 | CA 1083893 A1<br>DE 2749689 A1<br>FR 2402864 A1<br>GB 1545173 A<br>IT 1113810 B<br>JP 54041784 A<br>SE 433004 B<br>SE 7712318 A | 19-08-1980<br>26-07-1979<br>06-04-1979<br>02-05-1979<br>27-01-1986<br>03-04-1979<br>30-04-1984<br>09-03-1979 |
| WO 0152185 A | 19-07-2001 | DE 10000435 A1<br>WO 0152185 A2<br>EP 1246679 A2<br>JP 2003519880 T<br>US 2003025598 A1 | 12-07-2001<br>19-07-2001<br>09-10-2002<br>24-06-2003<br>06-02-2003 |
| US 4332679 A | 01-06-1982 | DE 3001675 A1<br>BR 8100235 A<br>JP 56111013 A | 23-07-1981<br>04-08-1981<br>02-09-1981 |

EPO FORM P0461

Für nähere Einzelheiten zu diesem Anhang : siehe Amtsblatt des Europäischen Patentamts, Nr.12/82